(19)

**Europäisches Patentamt**
**European Patent Office**
**Office européen des brevets**

(11) **EP 4 645 497 A1**

(12) **EUROPEAN PATENT APPLICATION**

(43) Date of publication:
**05.11.2025 Bulletin 2025/45**

(21) Application number: **24218327.5**

(22) Date of filing: **09.12.2024**

(51) International Patent Classification (IPC):
$H01M\ 10/0525^{(2010.01)}$ $\quad H01M\ 50/414^{(2021.01)}$
$H01M\ 50/42^{(2021.01)}$ $\quad H01M\ 50/446^{(2021.01)}$
$H01M\ 50/449^{(2021.01)}$ $\quad H01M\ 50/489^{(2021.01)}$
$H01M\ 10/0587^{(2010.01)}$

(52) Cooperative Patent Classification (CPC):
**H01M 10/0525; H01M 10/0587; H01M 50/414;
H01M 50/42; H01M 50/446; H01M 50/449;
H01M 50/489**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.04.2024 CN 202410544965
17.05.2024 CN 202410622552

(71) Applicants:
• **Huizhou EVE Power Co., Ltd**
**Tonghu Town, Zhongkai High-tech District
Huizhou, Guangdong 516000 (CN)**
• **Eve Power Co., Ltd.**
**Jingmen, Hubei 448000 (CN)**

(72) Inventors:
• **LIU, Fanfen**
**Huizhou, Guangdong, 516000 (CN)**
• **LI, Xingyu**
**Huizhou, Guangdong, 516000 (CN)**
• **ZHU, Zhiyuan**
**Huizhou, Guangdong, 516000 (CN)**
• **ZHANG, Huan**
**Huizhou, Guangdong, 516000 (CN)**
• **YUAN, Dingding**
**Huizhou, Guangdong, 516000 (CN)**

(74) Representative: **Herrero & Asociados, S.L.
Edificio Aqua - Agustín de Foxá, 4-10
28036 Madrid (ES)**

(54) **COMPOSITE SEPARATOR, WOUND CORE, AND LITHIUM-ION BATTERY**

(57) The present disclosure provides a composite separator, a wound core, and a lithiumion battery. The composite separator includes a porous substrate and a porous active layer; the porous active layer is arranged on at least one face of the porous substrate and includes a base coating and a non-binder polymer C embedded in the base coating, and the base coating includes inorganic particles A and a binder polymer B; the non-binder polymer C has a particle size D50 greater than a thickness of the base coating; a coverage rate of the non-binder polymer C is in a range of 2%-50%; and an average compression ratio P of the non-binder polymer C protruding from the base coating is in a range of 20%-50%.

EP 4 645 497 A1

**Description**

TECHNICAL FIELD

The present disclosure relates to a field of battery technology, and in particular to a composite separator, a wound core, and a lithium-ion battery.

BACKGROUND

Lithium-ion battery primarily includes a positive electrode, a negative electrode, a separator, an electrolyte and so on. The separator plays a very important role. First of all, the separator of the lithium-ion battery should exhibit a specific level of chemical stability and mechanical strength to provide an effective barrier, preventing a short circuit caused by the contact between the positive and negative electrodes. In addition, the separator should possess adequate permeability to facilitate the free movement of ions between the positive and negative electrodes, thereby enabling the lithium-ion battery's functions.

In recent years, with the development of the lithium-ion battery industry, the market demands for batteries are getting higher and higher, including long cycle performance and high energy density. Concurrently, the separator has also developed from a single PP/PE separator to a multifunctional composite separator with various functional coatings.

Presently, various separators are employed in the market, including conventional ceramic-coated separators, aqueous spray-coated adhesive separators, and oil-based aramid-coated separators. Due to inadequate adhesive property in conventional ceramic coated separators and aramid coated separators, it is difficult to effectively control the expansion of the electrode sheets during the charging and discharging processes in battery operation, resulting in wrinkling and increase in thickness of the electrode sheets. In addition, owing to process limitations, the aqueous spray-coated adhesive separators have a production capacity significantly lower than that of the ceramic coated separators, thereby resulting in a higher cost.

SUMMARY

In order to solve the above technical problems, the present disclosure aims at providing a composite separator, a wound core, and a lithium-ion battery.

The present disclosure provides a composite separator including a porous substrate and a porous active layer.

The porous active layer is arranged on at least one face of the porous substrate and includes a base coating and a non-binder polymer C embedded in the base coating, and the base coating includes inorganic particles A and a binder polymer B.

The non-binder polymer C has a particle size D50 greater than a thickness of the base coating.

A coverage rate of the non-binder polymer C is in a range of 2%-50%.

An average compression ratio $\overline{P}$ of the non-binder polymer C protruding from the base coating is in a range of 20%-50%.

The average compression ratio $\overline{P}$ is determined by a following method.

The composite separator is compressed for 1 min under a pressure of 5 kgf at 60°C, d1 and d2 of the non-binder polymer C protruding from the base coating are measured after the compression, with d1 being a long axis and d2 being a short axis of a central cross-sectional projection of the non-binder polymer C after the compression along a direction parallel to a compression direction, a compression ratio of the non-binder polymer C is calculated as P = (d1 - d2)/d1, and the average compression ratio is calculated as $\overline{P} = \sum_{i=1}^{n} Pi/n$, herein, $n$ represents the number of the non-binder polymer C in a data collection of the compression ratio P, and i is a positive integer greater than or equal to 1.

The coverage rate is measured by calculating a ratio of a total projected area S2 of the non-binder polymer C on a single face of the composite separator to a total area S1 of the single face, with the coverage rate expressed as S2/S1.

In the present disclosure, the average compression ratio $\overline{P}$ of the non-binder polymer C protruding from the base coating is in the range of 20%-50%, including but not limited to specific examples such as 20%, 25%, 30%, 35%, 40%, 45%, and 50%, and other unlisted values within the numerical range are also applicable.

In the present disclosure, the coverage rate of the non-binder polymer C is in the range of 2%-50%, including but not limited to specific examples such as 2%, 5%, 10%, 15%, 20%, 25%, 30%, 35%, 40%, 45%, and 50%, and other unlisted values within the numerical range are also applicable.

In the present disclosure, the non-binder polymer C has the particle size D50 greater than the thickness of the base coating, thereby forming obvious protrusions on a surface of the porous active layer. The protrusions enable the formation of gaps between the composite separator and electrode sheets. The compression ratio of the non-binder polymer C is in the range of 20% to 50%, and the coverage rate of the non-binder polymer C is from 2% to 50%. The protruding non-binder polymer C can not only achieve good bonding with the electrode sheets but also regulate the gaps between the composite separator and the electrode sheets. Consequently, the gaps can buffer the expansion generated during the charging and discharging process of the electrode sheets, maintain sufficient immersion of the electrolyte, and ensure adequate structural stability of the wound core, thereby improving cycling performance.

In an embodiment, the average compression ratio is in a range of 20%-30%, including but not limited to specific examples such as 20%, 23%, 25%, 28%, and 30%, and other unlisted values within the numerical range are also applicable.

In an embodiment, the coverage rate of the non-binder polymer C is in a range of 5%-15%, including but not limited to specific examples such as 5%, 8%, 10%, 13%, and 15%, and other unlisted values within the numerical range are also applicable.

In an embodiment, in a case where the thickness of the base coating is in a range of 1.0 $\mu$m-3.0 $\mu$m, the non-binder polymer C has a particle size D10 ranging from 0.5 $\mu$m to 3.0 $\mu$m, the particle size D50 ranging from 2.5 $\mu$m to 7.0 $\mu$m, and a particle size D90 ranging from 4.0 $\mu$m to 12 $\mu$m.

In the present embodiment, the thickness of the base coating is in the range of 1.0 $\mu$m-3.0 $\mu$m, including but not limited to specific examples such as 1.0 $\mu$m, 1.5 $\mu$m, 1.8 $\mu$m, 2.0 $\mu$m, 2.2 $\mu$m, 2.5 $\mu$m, and 3.0 $\mu$m, and other unlisted values within the numerical range are also applicable. The particle size D10 of the non-binder polymer C is in the range of 0.5 $\mu$m to 3.0 $\mu$m, including but not limited to specific examples such as 0.5 $\mu$m, 1.0 $\mu$m, 1.5 $\mu$m, 2.0 $\mu$m, 2.5 $\mu$m, and 3.0 $\mu$m, and other unlisted values within the numerical range are also applicable. The particle size D50 of the non-binder polymer C is in the range of 2.5 $\mu$m-7.0 $\mu$m, including but not limited to specific examples such as 2.5 $\mu$m, 3.0 $\mu$m, 3.5 $\mu$m, 4.0 $\mu$m, 4.5 $\mu$m, 5.0 $\mu$m, 5.5 $\mu$m, 6.0 $\mu$m, 6.5 $\mu$m, and 7.0 $\mu$m, and other unlisted values within the numerical range are also applicable. The particle size D90 of the non-binder polymer C is in the range of 4.0 $\mu$m-12 $\mu$m, including but not limited to specific examples such as 4.0 $\mu$m, 5.0 $\mu$m, 6.0 $\mu$m, 7.0 $\mu$m, 8.0 $\mu$m, 9.0 $\mu$m, 10.0 $\mu$m, 11.0 $\mu$m, and 12.0 $\mu$m, and other unlisted values within the numerical range are also applicable.

In the present embodiment, in a case where the thickness of the base coating is in the range of 1.0 $\mu$m-3.0 $\mu$m, the non-binder polymer C has the particle size D10 ranging from 0.5 $\mu$m to 3.0 $\mu$m, the particle size D50 ranging from 2.5 $\mu$m to 7.0 $\mu$m, and the particle size D90 ranging from 4.0 $\mu$m to 12 $\mu$m. Consequently, the size of the protrusions can be regulated, and both the bonding performance to the electrode sheets and the flatness of the wound core can be improved.

In an embodiment, in a case where the thickness of the base coating is in a range of 3.0 $\mu$m-5.0 $\mu$m, the non-binder polymer C has a particle size D10 ranging from 0.8 $\mu$m to 4.0 $\mu$m, the particle size D50 ranging from 3.0 $\mu$m to 9.0 $\mu$m, and a particle size D90 ranging from 5.0 $\mu$m to 15 $\mu$m.

In the present embodiment, the thickness of the base coating is in the range of 3.0 $\mu$m-5.0 $\mu$m, including but not limited to specific examples such as 3.0 $\mu$m, 3.5 $\mu$m, 4.0 $\mu$m, 4.5 $\mu$m, and 5.0 $\mu$m, and other unlisted values within the numerical range are also applicable. The particle size D10 of the non-binder polymer C is in the range of 0.8 $\mu$m to 4.0 $\mu$m, including but not limited to specific examples such as 0.8 $\mu$m, 1.0 $\mu$m, 1.5 $\mu$m, 2.0 $\mu$m, 2.5 $\mu$m, 3.0 $\mu$m, 3.5 $\mu$m, and 4.0 $\mu$m, and other unlisted values within the numerical range are also applicable. The particle size D50 of the non-binder polymer C is in the range of 3.0 $\mu$m-9.0 $\mu$m, including but not limited to specific examples such as 3.0 $\mu$m, 4.0 $\mu$m, 5.0 $\mu$m, 6.0 $\mu$m, 7.0 $\mu$m, 8.0 $\mu$m, and 9.0 $\mu$m, and other unlisted values within the numerical range are also applicable. The particle size D90 of the non-binder polymer C is in the range of 5.0 $\mu$m -15 $\mu$m, including but not limited to specific examples such as 5.0 $\mu$m, 6.0 $\mu$m, 7.0 $\mu$m, 8.0 $\mu$m, 9.0 $\mu$m, 10.0 $\mu$m, 11.0 $\mu$m, 12.0 $\mu$m, 13.0 $\mu$m, 14.0 $\mu$m, and 15.0 $\mu$m, and other unlisted values within the numerical range are also applicable.

In the present embodiment, in a case where the thickness of the base coating is in the range of 3.0 $\mu$m-5.0 $\mu$m, the non-binder polymer C has the particle size D10 ranging from 0.8 $\mu$m to 4.0 $\mu$m, the particle size D50 ranging from 3.0 $\mu$m to 9.0 $\mu$m, and the particle size D90 ranging from 5.0 $\mu$m to 15 $\mu$m. Consequently, the size of the protrusions can be regulated, and both the bonding performance to the electrode sheets and the flatness of the wound core can be improved.

In an embodiment, the non-binder polymer C includes at least one selected from a group consisting of (methyl) acrylate polymer, (methyl)acrylate monomer-acrylate monomer copolymer, styrene monomer-acrylonitrile monomer copolymer, and butadiene monomer-styrene monomer copolymer.

The present disclosure further provides a wound core including the composite separator.

In an embodiment, the wound core is prepared by a preheating and cold pressing process including: stacking and winding the composite separator with an electrode sheet to obtain a wound core; preheating the wound core for 20 min-35 min at a preheating temperature of 80°C-95°C; and cold pressing the wound core for 40 s-60 s under a pressure of 5.5 T-7.5 T. A glass transition temperature of the non-binder polymer C contained in the composite separator is in a range of 30°C-90°C.

In the present embodiment, the preheating temperature is in the range of 80°C-95°C, including but not limited to specific examples such as 80°C, 85°C, 90°C, and 95°C, and other unlisted values within the numerical range are also applicable. A cold pressing pressure is in the range of 5.5 T-7.5 T, including but not limited to specific examples such as 5.5 T, 6.0 T, 6.5 T, 7.0 T, and 7.5 T, and other unlisted values within the numerical range are also applicable. A cold pressing duration is in the range of 40 s-60 s, including but not limited to specific examples such as 40 s, 45 s, 50 s, 55 s, and 60 s, and other unlisted values within the numerical range are also applicable. The glass transition temperature of the non-binder polymer C contained in the composite separator is in the range of 30°C-90°C, including but not limited to specific examples such as 30°C, 40°C, 50°C, 60°C, 70°C, 80°C, and 90°C, and other unlisted values within the numerical range are also applicable.

In the present embodiment, relevant process parameters of the preheating and cold pressing process correspond to the glass transition temperature of the non-binder polymer C, so as to regulate the compression ratio of non-binder polymer C after the preheating and cold pressing operation. This ensures not only a good bonding between the protruding non-binder polymer C and the electrode sheets, but also allows for the regulation of gaps between the composite separator and the electrode sheets, enabling the composite separator with excellent air permeability. Moreover, the gaps between the composite separator and the electrode sheets can buffer the expansion of the electrode sheets during the charging and discharging process, thereby ensuring sufficient structural stability of the wound core.

In an embodiment, the glass transition temperature of the non-binder polymer C contained in the composite separator is in a range of 50°C-75°C, including but not limited to specific examples such as 50°C, 55°C, 60°C, 65°C, 70°C, and 75°C, and other unlisted values within the numerical range are also applicable.

The present disclosure further provides a lithium-ion battery including the wound core.

DETAILED DESCRIPTION

In order to enable those in the art to better understand the embodiments disclosed herein, the technical solutions encompassed by the embodiments of the present disclosure will be clearly and comprehensively described below. It should be noted that the embodiments detailed herein represent only a portion of the disclosure and are not exhaustive.

In the following, the average compression ratio P is determined by a following method. A separator is compressed for 1 min under a pressure of 5 kgf at 60°C. Subsequently, the separator is polished by means of argon ions to obtain a cross-sectional sample. Then, the morphology of the non-binder polymer C is observed under a 2000x magnification, and d1 and d2 of the non-binder polymer C protruding from the base coating were measured. The non-binder polymer C has a compression ratio expressed as P = (d1 - d2)/d1. Herein, d1 represents a diameter of the non-binder polymer C along a direction perpendicular to a compression direction, and d2 represents a diameter of the non-binder polymer C along a direction parallel to the compression direction. The average compression ratio is calculated as $\bar{P} = \sum_{i=1}^{n} Pi/n$. Herein, $n$ represents the number of the non-binder polymer C in a data collection of the compression ratio P, and $i$ is a positive integer greater than or equal to 1.

In the following, the coverage rate of the non-binder polymer C is determined by a following method.

A porous active layer of a composite separator is photographed at 500x magnification using a VHX-7000 microscope to obtain a morphology area S1. Subsequently, the area covered by the non-binder polymer C on this porous active layer was captured by an image processing function of an equipment to obtain a total coverage area S2. The coverage rate is then calculated as the ratio of S2 to S1.

In the following examples and comparative examples, the non-binder polymer adopted is a methyl methacrylate-ethyl acrylate copolymer. By means of adjusting the mass fraction of methyl methacrylate monomer and ethyl acrylate monomer, non-binder polymers C with different Tg values (glass transition temperatures) as detailed in the examples and comparative examples were obtained. The average compression ratio of the non-binder polymer C can be regulated through the Tg value.

Example 1

1. Preparation of Composite Separator

S1, inorganic particles, aluminum oxide, a binder polymer, ethylene-vinyl acetate copolymer, and a non-binder polymer, methyl methacrylate-ethyl acrylate copolymer with a Tg value of 70°C, D10 of 2 μm, D50 of 5 μm, D90 of 8 μm, were added to a mixing tank in a mass ratio of 85:5:10, followed by an addition of a solvent, deionized water. Subsequently, the resulting mixture was continuously dispersed for 80 min at a stirring speed of 1200 rpm to produce a coating slurry.

S2, the prepared coating slurry was uniformly coated on both sides of a porous polyolefin PE (polyethylene) substrate film by slot die coating at a coating speed of 60 m/min, which is subsequently dried in an oven at an oven temperature of 65°C-70°C to produce the composite separator. The obtained composite separator had a water content less than or equal to 1000 ppm, and a thickness of a base coating was 2 μm.

2. Preparation of Wound Core

a. Preparation of Negative Electrode Sheet

A negative electrode active material, graphite, a conductive agent, acetylene black, a thickener, CMC (sodium carboxymethyl cellulose), and a binder, SBR (styrene butadiene rubber), were mixed in a mass ratio of 96:1:1.6:1.4, followed by an addition of a solvent, deionized water. The resulting mixture was then stirred using a vacuum mixer to produce a homogeneous negative electrode slurry.

The prepared negative electrode slurry was uniformly coated on both sides of a negative electrode current collector, copper foil, which was subsequently rolled and slit to produce the negative electrode sheet.

b. Preparation of Positive Electrode Sheet

A positive electrode active material, $LiFePO_4$, a conductive agent, acetylene black, and a binder, PVDF (polyvinylidene fluoride), were mixed in a mass ratio of 96:2:2, followed by an addition of a solvent, NMP (N-methylpyrrolidone). The resulting mixture was then stirred using a vacuum mixer to produce a homogeneous positive electrode slurry. The positive electrode slurry was uniformly coated on both sides of a positive electrode current collector, aluminum foil, which is then air-dried at room temperature, further dried in an oven, cold-pressed, and slit to produce the positive electrode.

c. Preparation of Electrolyte

Ethylene Carbonate (EC), Ethyl Methyl Carbonate (EMC), and Diethyl Carbonate (DEC) were mixed in a volume ratio of 1:1:1 to obtain an organic solvent. Subsequently, a thoroughly dried lithium salt, LiPF6, was dissolved in the organic solvent to produce an electrolyte with a lithium ion concentration of 1 mol/L.

d. Preparation of Separator

The composite separator prepared from Example 1 was selected as the separator.

e. Preparation of Wound Core

The positive electrode sheet, the separator, and the negative electrode sheet were sequentially stacked, with the separator being sandwiched between the positive electrode sheet and the negative electrode sheet to play a role of isolation. After being wound, the positive electrode sheet, the separator, and the negative electrode sheet were preheated for 30 min at a preheating temperature of 85°C-90°C and cold pressed for 50 s under a pressure of 7 T to produce the wound core.

3. Preparation of Lithium-ion Battery

The aforementioned wound core was placed in an outer packaging shell, dried, and then filled with the electrolyte, followed by vacuum encapsulation, resting, chemical formation, shaping, and other processes to produce the lithium-ion battery.

Example 2

1. Preparation of Composite Separator

The composite separator of this example was prepared with reference to the method described in Example 1 for the preparation of a composite separator. The differences from Example 1 lay in: the Tg value of the non-binder polymer, methyl methacrylate-ethyl acrylate copolymer, was 75°C, and the mass ratio of the inorganic particles, aluminium oxide, the binder polymer, ethylene-vinyl acetate copolymer, and non-binder polymer, methyl methacrylate-ethyl acrylate copolymer, was 82:4:14. Apart from the aforementioned differences, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The differences from Example 1 lay in: the preheating temperature was 90°C -95°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 3

1. Preparation of Composite Separator

The composite separator of this example was prepared with reference to the method described in Example 1 for the preparation of a composite separator. The differences from Example 1 lay in: the Tg value of the non-binder polymer, methyl methacrylate-ethyl acrylate copolymer, was 65°C, and the mass ratio of the inorganic particles, aluminium oxide, the binder polymer, ethylene-vinyl acetate copolymer, and non-binder polymer, methyl methacrylate-ethyl acrylate copolymer was 91.5:4.5:4. Apart from the aforementioned differences, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The differences from Example 1 lay in: the preheating temperature was 80°C -85°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 4

1. Preparation of Composite Separator

The composite separator of this example was prepared with reference to the method described in Example 1 for the preparation of a composite separator. The differences from Example 1 lay in: the Tg value of the non-binder polymer, methyl methacrylate-ethyl acrylate copolymer, was 75°C, and the mass ratio of the inorganic particles, aluminium oxide, the binder polymer, ethylene-vinyl acetate copolymer, and non-binder polymer, methyl methacrylate-ethyl acrylate copolymer was 64:2:34. Apart from the aforementioned differences, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The differences from Example 1 lay in: the preheating temperature was 90°C -95°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 5

1. Preparation of Composite Separator

The composite separator of this example was prepared with reference to the method described in Example 1 for the preparation of a composite separator. The difference from Example 1 lay in: the Tg value of the non-binder polymer, methyl methacrylate-ethyl acrylate copolymer, was 60°C. Apart from the aforementioned difference, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The differences from Example 1 lay in: the preheating temperature was 75°C -80°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 6

1. Preparation of Composite Separator

The composite separator of this example was prepared with reference to the method described in Example 1 for the preparation of a composite separator. The differences from Example 1 lay in: the Tg value of the non-binder polymer, methyl methacrylate-ethyl acrylate copolymer, was 50°C, and the mass ratio of the inorganic particles, aluminium oxide, the binder polymer, ethylene-vinyl acetate copolymer, and non-binder polymer, methyl methacrylate-ethyl acrylate copolymer was 93.5:5:1.5. Apart from the aforementioned differences, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The differences from Example 1 lay in: the preheating temperature was 70°C -75°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 7

1. Preparation of Composite Separator

The composite separator of this example was prepared with reference to the method described in Example 1 for the preparation of a composite separator. The differences from Example 1 lay in: the particle size distribution of the non-binder polymer, methyl methacrylate-ethyl acrylate copolymer, was characterized as follows: D10 was 3 $\mu$m, D50 was 6 $\mu$m, and D90 was 10 $\mu$m, and the base coating has a thickness of 4$\mu$m. Apart from the aforementioned differences, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The difference from Example 1 lay in: the composite separator prepared according to this example was employed in the preparation of the wound core. Apart from the aforementioned difference, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 8

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 75°C, and the mass ratio of the inorganic particles, aluminium oxide, the binder polymer, ethylene-vinyl acetate copolymer, and non-binder polymer, methyl methacrylate-ethyl acrylate copolymer was 82:4:14. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 90°C-95°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 9

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 65°C, and the mass ratio of the inorganic particles, aluminium oxide, the binder polymer, ethylene-vinyl acetate copolymer, and non-binder polymer, methyl methacrylate-ethyl acrylate copolymer was 91.5:4.5:4. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 80°C -85°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 10

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 75°C, and the mass ratio of the inorganic particles, aluminium oxide, the binder polymer, ethylene-vinyl acetate copolymer, and non-binder polymer, methyl methacrylate-ethyl acrylate copolymer was 64:2:34. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 90°C -95°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 11

1. Preparation of Composite Separator

The composite separator of this example was prepared with reference to the method described in Example 7 for the preparation of a composite separator. The difference from Example 7 lay in: the Tg value of the non-binder polymer, methyl methacrylate-ethyl acrylate copolymer, was 60°C. Apart from the aforementioned difference, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 75°C -80°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 12

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 50°C, and the mass ratio of the inorganic particles, aluminium oxide, the binder polymer, ethylene-vinyl acetate copolymer, and non-binder polymer, methyl methacrylate-ethyl acrylate copolymer was 93.5:5:1.5. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 70°C -75°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 13

1. Preparation of Composite Separator

The composite separator of this example was prepared with reference to the method described in Example 1 for the preparation of a composite separator. The differences from Example 1 lay in: the particle size distribution of the non-binder polymer, methyl methacrylate-ethyl acrylate copolymer, was characterized as follows: D10 was 0.5 $\mu$m, D50 was 1 $\mu$m, and D90 was 3 $\mu$m. Apart from the aforementioned difference, all other materials and operations for the preparation of the composite separator in this example were strictly consistent with those in Example 1.

2. Preparation of Wound Core

Referring to the method for preparing the wound core in Example 1, the wound core of this example was prepared using the composite separator produced in this example. The difference from Example 1 lay in: the composite separator prepared according to this example was employed in the preparation of the wound core. Apart from the aforementioned difference, all other materials and operations for the preparation of the wound core in this example were strictly consistent with those in Example 1.

3. Preparation of Lithium-ion Battery

Referring to the method for preparing the lithium-ion battery in Example 1, the lithium-ion battery of this example was prepared using the wound core produced in this example. The difference from Example 1 lay in: the wound core prepared according to this example was employed in the preparation of the lithium-ion battery. Apart from the aforementioned difference, all other materials and operations for the preparation of the lithium-ion battery in this example were strictly consistent with those in Example 1.

Example 14

1. Preparation of Composite Separator

The composite separator of this example was prepared with reference to the method described in Example 7 for the preparation of a composite separator. The differences from Example 7 lay in: the particle size distribution of the non-binder polymer, methyl methacrylate-ethyl acrylate copolymer, was characterized as follows: D10 was 6 $\mu$m, D50 was 10 $\mu$m, and D90 was 20 $\mu$m. Apart from the aforementioned difference, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The difference from Example 7 lay in: the composite separator prepared according to this example was employed in the preparation of the wound core. Apart from the aforementioned difference, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Example 15

1. Preparation of Composite Separator

The composite separator of this example was prepared with reference to the method described in Example 7 for the preparation of a composite separator. All other materials and operations for the preparation of the composite separator in this example were strictly consistent with those in Example 7.

2. Preparation of Wound Core

The wound core of this example was prepared referring to the method for preparing the wound core in Example 7. The difference from Example 7 lay in: the preheating temperature was 65°C-70°C in the preheating and cold pressing process of this example. Apart from the aforementioned difference, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 1

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 80°C, and the mass ratio of the inorganic particles, aluminium oxide, the binder polymer, ethylene-vinyl acetate copolymer, and non-binder polymer, methyl methacrylate-ethyl acrylate copolymer was 58:2:40. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 95°C-100°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 2

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 45°C, and the mass ratio of the inorganic particles, aluminium oxide, the binder polymer, ethylene-vinyl acetate copolymer, and non-binder polymer, methyl methacrylate-ethyl acrylate copolymer was 94.5:5:0.5. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 60°C-65°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 3

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 80°C, and the mass ratio of the inorganic particles, aluminium oxide, the binder polymer, ethylene-vinyl acetate copolymer, and non-binder polymer, methyl methacrylate-ethyl acrylate copolymer was 64:2:34. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 95°C-100°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 4

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 45°C, and the mass ratio of the inorganic particles, aluminium oxide, the binder polymer, ethylene-vinyl acetate copolymer, and non-binder polymer, methyl methacrylate-ethyl acrylate copolymer was 93.5:5:1.5. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 60°C-65°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 5

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 75°C, and the mass ratio of the inorganic particles, aluminium oxide, the binder polymer, ethylene-vinyl acetate copolymer, and non-binder polymer, methyl methacrylate-ethyl acrylate copolymer was 58:2:40. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 90°C-95°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Comparative Example 6

1. Preparation of Composite Separator

The composite separator of this example was prepared with reference to the method described in Example 7 for the preparation of a composite separator. The differences from Example 7 lay in: the Tg value of the non-binder polymer, methyl methacrylate-ethyl acrylate copolymer, was 50°C, and the mass ratio of the inorganic particles, aluminium oxide, the binder polymer, ethylene-vinyl acetate copolymer, and non-binder polymer, methyl methacrylate-ethyl acrylate copolymer was 94.5:5:0.5. Apart from the aforementioned differences, all other materials and operations for the preparation of the composite separator in this example were strictly consistent with those in Example 7.

2. Preparation of Wound Core

Referring to the method for preparing the wound core in Example 7, the wound core of this example was prepared using the composite separator produced in this example. The differences from Example 7 lay in: the preheating temperature was 70°C-75°C in the preheating and cold pressing process of this example, and the composite separator prepared according to this example was employed in the preparation of the wound core. Apart from the aforementioned differences, all other materials and operations for the preparation of the wound core in this example were strictly consistent with those in Example 7.

3. Preparation of Lithium-ion Battery

Referring to the method for preparing the lithium-ion battery in Example 7, the lithium-ion battery of this example was prepared using the wound core produced in this example. The difference from Example 7 lay in: the wound core prepared according to this example was employed in the preparation of the lithium-ion battery. Apart from the aforementioned difference, all other materials and operations for the preparation of the lithium-ion battery in this example were strictly consistent with those in Example 7.

Performance Test

1. Air Permeability of Composite Separator

The air permeability of the composite separator was tested at 25°C by following the testing method for separator air permeability specified in section 6.5.4 of the national standard GB/T 36363-2018.

2. Flatness of Wound Core

A square wound core was placed with a tab side facing upward, with the tab side defined as the top and the opposing side defined as the bottom. Subsequently, thicknesses $h_1$-$h_5$ of 5 different positions equally distributed along a length direction of the bottom of the square wound core were measured. The flatness of the wound core was calculated by the following formula:

$$\text{the wound core flatness } \% = \left(1 - \frac{Max(h_1 - h_5) - Min(h_1 - h_5)}{Ave(h_1 - h_5)}\right) * 100\%$$

In detail, Max represents the maximum value among the given data $h_1$-$h_5$, Min represents the minimum value among the given data $h_1$-$h_5$, and Ave represents an average value among the given data $h_1$-$h_5$.

3. Cycling Performance of Lithium-ion Battery

The prepared lithium-ion battery was subjected to a full charge-discharge cycle test for 1000 cycles at 25°C, with both charging and discharging conducted at a 1C rate, while the capacity retention rate was recorded during the test.
The test outcomes of the air permeability of the composite separator, the flatness of the wound core, and the cycling performance of the lithium-ion battery are detailed in Table 1 below.

Table 1

| group | average compression ratio | coverage rate | thickness of base coating | particle size distribution of non-binder polymer | | | preheating temperature (°C) | air permeability of composite separator (s/100mL) | flatness of wound core | capacity retention rate |
| --- | --- | --- | --- | --- | --- | --- | --- | --- | --- | --- |
| | | | | D10 | D50 | D90 | | | | |
| Ex. 1 | 25% | 10% | 2 μm | 2 μm | 5 μm | 8 μm | 85-90 | 211 | 98.00% | 90.60% |
| Ex. 2 | 20% | 15% | 2 μm | 2 μm | 5 μm | 8 μm | 90-95 | 232 | 98.60% | 90.10% |
| Ex. 3 | 30% | 5% | 2 μm | 2 μm | 5 μm | 8 μm | 80-85 | 199 | 97.10% | 90.30% |
| Ex. 4 | 20% | 50% | 2 μm | 2 μm | 5 μm | 8 μm | 90-95 | 262 | 99.10% | 89.70% |
| Ex. 5 | 40% | 10% | 2 μm | 2 μm | 5 μm | 8 μm | 75-80 | 226 | 97.40% | 87.30% |
| Ex. 6 | 50% | 2% | 2 μm | 2 μm | 5 μm | 8 μm | 70-75 | 191 | 95.50% | 85.80% |
| Ex. 7 | 25% | 10% | 4 μm | 3 μm | 6 μm | 10 μm | 85-90 | 281 | 97.50% | 88.70% |
| Ex. 8 | 20% | 15% | 4 μm | 3 μm | 6 μm | 10 μm | 90-95 | 290 | 98.00% | 86.40% |
| Ex. 9 | 30% | 5% | 4 μm | 3 μm | 6 μm | 10 μm | 80-85 | 274 | 96.40% | 87.90% |
| Ex. 10 | 20% | 50% | 4 μm | 3 μm | 6 μm | 10 μm | 90-95 | 319 | 98.80% | 85.80% |
| Ex. 11 | 40% | 10% | 4 μm | 3 μm | 6 μm | 10 μm | 75-80 | 288 | 97.10% | 84.60% |
| Ex. 12 | 50% | 2% | 4 μm | 3 μm | 6 μm | 10 μm | 70-75 | 269 | 95.00% | 83.80% |
| Ex. 13 | 25% | 10% | 2 μm | 0.5 μm | 1 μm | 3 μm | 85-90 | 213 | 94.60% | 84.10% |
| Ex. 14 | 25% | 10% | 4 μm | 6 μm | 10 μm | 20 μm | 85-90 | 280 | 95.40% | 83.30% |
| Ex. 15 | 25% | 10% | 4 μm | 3 μm | 6 μm | 10 μm | 65-70 | 281 | 97.10% | 87.60% |
| Comp. Ex. 1 | 10% | 60% | 4 μm | 3 μm | 6 μm | 10 μm | 95-100 | 326 | 98.60% | 73.50% |
| Comp. Ex. 2 | 60% | 1% | 4 μm | 3 μm | 6 μm | 10 μm | 60-65 | 278 | 94.00% | 65.50% |
| Comp. Ex. 3 | 10% | 50% | 4 μm | 3 μm | 6 μm | 10 μm | 95-100 | 294 | 97.70% | 75.20% |
| Comp. Ex. 4 | 60% | 2% | 4 μm | 3 μm | 6 μm | 10 μm | 60-65 | 279 | 94.50% | 69.80% |
| Comp. Ex. 5 | 20% | 60% | 4 μm | 3 μm | 6 μm | 10 μm | 90-95 | 341 | 98.00% | 76.40% |
| Comp. Ex. 6 | 50% | 1% | 4 μm | 3 μm | 6 μm | 10 μm | 70-75 | 268 | 94.70% | 71.60% |

Each of the composite separators prepared in Examples 1-15 is a product in which the coverage rate of the non-binder polymer is 2%-50% and the average compression ratio $\overline{P}$ of the non-binder polymer protruding from the base coating is 20%-50%. The lithium-ion batteries produced using these composite separators have good cycling performance. In contrast, none of the composite separators from Comparative Examples 1-6 is a product having the coverage rate of 2%-50% of the non-binder polymer and the average compression ratio $\overline{P}$ of 20%-50% of the non-binder polymer. Compared with Examples 1-15, the lithium-ion batteries prepared using the composite separators from Comparative Examples 1-6 have a poor cycling performance. It is thus shown that the application of a composite separator characterized by the coverage rate of 2%-50% of the non-binder polymer and the average compression ratio $\overline{P}$ of 20%-50% of the non-binder polymer enables the lithium-ion battery with excellent cycling performance.

In Examples 1-6, the cycling performance associated with Examples 1, 2, and 3 is superior. This suggests that the cycling performance of the lithium-ion battery can be further enhanced when the coverage rate of the non-binder polymer in the composite separator is 5%-15% and the average compression ratio $\overline{P}$ of the non-binder polymer is 20%-30%. The coverage rate of the non-binder polymer in Example 4 fails to fall into the range of 5%-15%, the average compression ratio $\overline{P}$ of the non-binder polymer in Example 5 fails to fall into the range of 20%-30%, the coverage rate of the non-binder polymer in Example 6 fails to fall into the range of 5%-15%, and the average compression ratio $\overline{P}$ of the non-binder polymer in Example 6 fails to fall into the range of 20%-30%.

In Examples 7-12, the cycling performance associated with Examples 7, 8, and 9 is superior. This indicates that the cycling performance of the lithium-ion battery can be further enhanced when the coverage rate of the non-binder polymer in the composite separator is 5%-15% and the average compression ratio $\overline{P}$ of the non-binder polymer is 20%-30%. The coverage rate of the non-binder polymer in Example 10 fails to fall into the range of 5%-15%, the average compression ratio $\overline{P}$ of the non-binder polymer in Example 11 fails fall into the range of 20%-30%, the coverage rate of the non-binder polymer in Example 12 fails to fall into the range of 5%-15%, and the average compression ratio $\overline{P}$ of the non-binder polymer in Example 12 fails to fall into the range of 20%-30%.

The test results of the air permeability of the composite separator, the flatness of the wound core, and the performance of the lithium-ion battery between Example 1 and Example 13 show that the air permeability of the composite separator, the flatness of the wound core, and the performance of the lithium-ion battery associated with Example 1 are superior compared to Example 13. When the thickness of the base coating in Example 1 is within the range of 1.5 μm-3.0 μm, the particle size distribution of the non-binder polymer is characterized as follows: D10: 0.5 μm-3.0 μm, D50: 2.5 μm-7.0 μm, and D90: 4.0 μm-12 μm. This allows the size of the protrusions to be regulated, thereby improving the bonding performance to the electrode sheets and the flatness of the wound core. However, when the thickness of the base coating of Example 13 is 1.5 μm-3.0 μm, the particle sizes D10, D50, and D90 of non-binder polymer are all smaller. As a result, the air permeability of the separator is diminished, and the gaps formed between the composite separator and the electrode sheets are smaller. The smaller gaps between the composite separator and electrode sheets decrease the ability to buffer the expansion of the electrode sheets during the charging and discharging process, thereby reducing the flatness of the wound core. Since the size of the protrusions formed by the non-binder polymer is smaller, the bonding performance to the electrode sheets is decreased, leading to a decrease in the structural stability of the composite separator and the electrode sheets and the cycling performance of the lithium-ion battery.

The test results of the flatness of the wound core and the performance of the lithium-ion battery between Example 7 and Example 14 demonstrate that the flatness of the wound core and the cycling performance of the lithium-ion battery associated with Example 7 are superior compared to Example 14. When the thickness of the base coating in Example 7 is within the range of 3.0 μm-5.0 μm, the particle size distribution of the non-binder polymer is characterized as follows: D10: 0.8 μm-4.0 μm, D50: 3.0 μm-9.0 μm, and D90: 5.0 μm-15 μm. This allows the size of the protrusions to be regulated, thereby improving the bonding performance to the electrode sheets and the flatness of the wound core. However, when the thickness of the base coating of Example 14 is 1.5 μm-3.0 μm, the particle sizes D10, D50, and D90 of non-binder polymer are all larger. Consequently, the size of the protrusions formed by the non-binder polymer is larger, thereby decreasing the wound core flatness, the structural stability of the composite separator and the electrode sheets, and the cycling performance of the lithium-ion battery.

As can be seen in the test results of the flatness of the wound core and the performance of the lithium-ion battery between Example 7 and Example 15, the flatness of the wound core and the cycling performance of the lithium-ion battery associated with Example 7 are superior compared to Example 15. The preheating temperature used in the preheating and cold pressing process for preparing the wound core in Example 15 is lower, which results in a decrease in the bonding effect between the composite separator and the electrode sheets, thereby decreasing the flatness of the wound core, the structural stability of both the composite separator and the electrode sheets, and the cycling performance of the lithium-ion battery.

The above embodiments are only used to illustrate the technical solution of the present disclosure rather than to limit the scope of protection of the present disclosure. Although the present disclosure is described in detail with reference to the preferred embodiments, the person of ordinary skill in the art should understand that modifications or equivalent replacements can be made to the technical solution of the present disclosure without departing from the substance and scope of the technical solution of the present disclosure.

**Claims**

1. A composite separator, **characterized by** comprising: a porous substrate and a porous active layer;

   wherein the porous active layer is arranged on at least one face of the porous substrate and comprises a base coating and a non-binder polymer C embedded in the base coating, and the base coating comprises inorganic particles A and a binder polymer B;
   the non-binder polymer C has a particle size D50 greater than a thickness of the base coating;
   a coverage rate of the non-binder polymer C is in a range of 2%-50%;
   an average compression ratio $\overline{P}$ of the non-binder polymer C protruding from the base coating is in a range of 20%-50%;
   wherein the average compression ratio $\overline{P}$ is determined by a following method:

   the composite separator is compressed for 1 min under a pressure of 5 kgf at 60°C, d1 and d2 of the non-binder polymer C protruding from the base coating are measured after the compression, with d1 being a long axis and d2 being a short axis of a central cross-sectional projection of the non-binder polymer C after the compression along a direction parallel to a compression direction, a compression ratio of the non-binder polymer C is calculated as P = (d1 - d2)/d1, and the average compression ratio is calculated as $\overline{P} = \sum_{i=1}^{n} Pi/n$, wherein $n$ represents the number of the non-binder polymer C in a data collection of the compression ratio P, and $i$ is a positive integer greater than or equal to 1;
   wherein the coverage rate is measured by calculating a ratio of a total projected area S2 of the non-binder polymer C on a single face of the composite separator to a total area S1 of the single face, with the coverage rate expressed as S2/S1.

2. The composite separator according to claim 1, wherein the average compression ratio $\overline{P}$ is in a range of 20%-30%.

3. The composite separator according to any one of claims 1-2, wherein the average compression ratio $\overline{P}$ is selected from a group consisting of 20%, 23%, 25%, 28%, and 30%.

4. The composite separator according to any one of claims 1-3, wherein the coverage rate of the non-binder polymer C is in a range of 5%-15%.

5. The composite separator according to any one of claims claim 1-4, wherein the coverage rate of the non-binder polymer C is selected from a group consisting of 5%, 8%, 10%, 13%, and 15%.

6. The composite separator according to any one of claims 1-5, wherein in a case where the thickness of the base coating is in a range of 1.0 $\mu$m-3.0 $\mu$m, the non-binder polymer C has a particle size D10 ranging from 0.5 $\mu$m to 3.0 $\mu$m, the particle size D50 ranging from 2.5 $\mu$m to 7.0 $\mu$m, and a particle size D90 ranging from 4.0 $\mu$m to 12 $\mu$m.

7. The composite separator according to claim 6, wherein the thickness of the base coating is selected from a group consisting of 1.0 $\mu$m, 1.5 $\mu$m, 1.8 $\mu$m, 2.0 $\mu$m, 2.2 $\mu$m, 2.5 $\mu$m, and 3.0 $\mu$m, the particle size D10 of the non-binder polymer C is selected from a group consisting of 0.5 $\mu$m, 1.0 $\mu$m, 1.5 $\mu$m, 2.0 $\mu$m, 2.5 $\mu$m, and 3.0 $\mu$m, the particle size D50 of the non-binder polymer C is selected from a group consisting of 2.5 $\mu$m, 3.0 $\mu$m, 3.5 $\mu$m, 4.0 $\mu$m, 4.5 $\mu$m, 5.0 $\mu$m, 5.5 $\mu$m, 6.0 $\mu$m, 6.5 $\mu$m, and 7.0 $\mu$m, and the particle size D90 of the non-binder polymer C is selected from a group consisting of 4.0 $\mu$m, 5.0 $\mu$m, 6.0 $\mu$m, 7.0 $\mu$m, 8.0 $\mu$m, 9.0 $\mu$m, 10.0 $\mu$m, 11.0 $\mu$m, and 12.0 $\mu$m.

8. The composite separator according to any one of claims 1-7, wherein in a case where the thickness of the base coating is in a range of 3.0 $\mu$m-5.0 $\mu$m, the non-binder polymer C has a particle size D10 ranging from 0.8 $\mu$m to 4.0 $\mu$m, the particle size D50 ranging from 3.0 $\mu$m to 9.0 $\mu$m, and a particle size D90 ranging from 5.0 $\mu$m to 15 $\mu$m.

9. The composite separator according to claim 8, wherein the thickness of the base coating is selected from a group consisting of 3.0 $\mu$m, 3.5 $\mu$m, 4.0 $\mu$m, 4.5 $\mu$m, and 5.0 $\mu$m, the particle size D10 of the non-binder polymer C is selected from a group consisting of 0.8 $\mu$m, 1.0 $\mu$m, 1.5 $\mu$m, 2.0 $\mu$m, 2.5 $\mu$m, 3.0 $\mu$m, 3.5 $\mu$m, and 4.0 $\mu$m, the particle size D50 of the non-binder polymer C is selected from a group consisting of 3.0 $\mu$m, 4.0 $\mu$m, 5.0 $\mu$m, 6.0 $\mu$m, 7.0 $\mu$m, 8.0 $\mu$m, and 9.0 $\mu$m, the particle size D90 of the non-binder polymer C is selected from a group consisting of 5.0 $\mu$m, 6.0 $\mu$m, 7.0 $\mu$m, 8.0 $\mu$m, 9.0 $\mu$m, 10.0 $\mu$m, 11.0 $\mu$m, 12.0 $\mu$m, 13.0 $\mu$m, 14.0 $\mu$m, and 15.0 $\mu$m.

10. The composite separator according to any one of claims1-9, wherein the non-binder polymer C comprises at least one selected from a group consisting of (methyl)acrylate polymer, (methyl)acrylate monomer-acrylate monomer copolymer, styrene monomer-acrylonitrile monomer copolymer, and butadiene monomer-styrene monomer copolymer.

11. A wound core, **characterized by** comprising the composite separator according to any one of claims 1-10.

12. The wound core according to claim 11, wherein the wound core is prepared by a preheating and cold pressing process comprising:

 stacking and winding the composite separator with an electrode sheet to obtain a wound core;
 preheating the wound core for 20 min-35 min at a preheating temperature of 80°C-95°C; and
 cold pressing the wound core for 40 s-60 s under a pressure of 5.5 T-7.5 T;
 wherein a glass transition temperature of the non-binder polymer C contained in the composite separator is in a range of 30°C-90°C.

13. The wound core according to claim 12, wherein the glass transition temperature of the non-binder polymer C is in a range of 50°C-75°C.

14. The wound core according to any one of claims 12-13, wherein the glass transition temperature of the non-binder polymer C is selected from a group consisting of 50°C, 55°C, 60°C, 65°C, 70°C, and 75°C.

15. A lithium-ion battery, **characterized by** comprising the wound core according to any one of claims 11-14.

Europäisches
Patentamt

European
Patent Office

Office européen
des brevets

# EUROPEAN SEARCH REPORT

Application Number

**EP 24 21 8327**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 708 008 A (HUIZHOU LIWINON NEW ENERGY TECH CO LTD) 26 November 2021 (2021-11-26) * paragraphs [0031] - [0033] * * claim 1 * * figure 1 * ----- | 1-15 | INV. H01M10/0525 H01M50/414 H01M50/42 H01M50/446 H01M50/449 H01M50/489 H01M10/0587 |
| A | WO 2024/032162 A1 (ZHUHAI COSMX BATTERY CO LTD [CN]) 15 February 2024 (2024-02-15) * page 7, lines 1-6 * * claims 1,5,6 * * figure 1 * ----- | 1-15 | |
| A | WO 2021/172958 A1 (LG ENERGY SOLUTION LTD [KR]) 2 September 2021 (2021-09-02) * paragraph [0116] * ----- | 1-15 | |

TECHNICAL FIELDS
SEARCHED     (IPC)

H01M

The present search report has been drawn up for all claims

| Place of search | Date of completion of the search | Examiner |
|---|---|---|
| The Hague | 30 April 2025 | Knoflacher, Andreas |

EPO FORM 1503 03.82 (P04C01)

## ANNEX TO THE EUROPEAN SEARCH REPORT
## ON EUROPEAN PATENT APPLICATION NO.

EP 24 21 8327

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| CN 113708008 | A | 26-11-2021 | NONE | | |
| WO 2024032162 | A1 | 15-02-2024 | CN | 115275524 A | 01-11-2022 |
| | | | EP | 4535541 A1 | 09-04-2025 |
| | | | US | 2025038358 A1 | 30-01-2025 |
| | | | WO | 2024032162 A1 | 15-02-2024 |
| WO 2021172958 | A1 | 02-09-2021 | CN | 115088128 A | 20-09-2022 |
| | | | EP | 4102637 A1 | 14-12-2022 |
| | | | JP | 7477626 B2 | 01-05-2024 |
| | | | JP | 2023516181 A | 18-04-2023 |
| | | | KR | 20210109478 A | 06-09-2021 |
| | | | US | 2023086309 A1 | 23-03-2023 |
| | | | WO | 2021172958 A1 | 02-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 363632018 T